# EUROPEAN PATENT SPECIFICATION

(11) **EP 0 488 375 B1**
(45) Date of publication and mention of the grant of the patent: **10.04.1996**
(21) Application number: 91120527.6
(22) Date of filing: 29.11.1991
(51) Int. Cl.: B62K 25/00, B62K 25/24

(54) **Motorcycle with front wheel steering and suspension arrangement**
Motorradanordnung mit Vorderradlenkung und -aufhängung
Aménagement d'un motocyclette avec direction et suspension de roue avant

(30) Priority: 30.11.1990 JP 340847/90
(43) Date of publication of application: 03.06.1992
(73) Proprietor: YAMAHA HATSUDOKI KABUSHIKI KAISHA, Iwata-shi Shizuoka-ken, 438 (JP)
(72) Inventor: Tanaka, Toyoji, c/o 2500 Shingai, Shizuoka-ken, 438 (JP)
(74) Representative: Grünecker, Kinkeldey, Stockmair & Schwanhäusser Anwaltssozietät

(56) References cited:
- DE-A- 3 723 107
- DE-A- 3 820 860
- GB-A- 433 510
- PATENT ABSTRACTS OF JAPAN vol. 14, no. 572 (M-1061)(4515) 19 December 1990

## Description

This invention relates to a motorcycle of the type indicated in the preamble of claim 1.

Rear swing arm suspensions are now well known in the motorcycle industry and have become rather common in recent years. In such suspension systems, the rear wheel of the motorcycle is journalled to the end of a U-shaped fork, or swing arm. The suing arm is hinged to the frame of the motorcycle and extends rearwardly. The rear swing arm and wheel undergo generally vertical swinging motion in response to road shocks and changing weight loads. The swing arm is spring loaded downwardly, typically by means of a compression spring, so that the swing arm can bear ordinary weight loads as well as road shocks. Various combinations of shock absorbers, dampers, and springs have been used to spring load and damp the swing arm. Road shocks and changing weight loads are typically transmitted via swinging motion of the swing arm to a shock absorber that incorporates a damper as well as the compression spring that provides the necessary downward force on the swing arm. There is commonly provided some mechanism for adjusting the spring force applied to the swing arm in order to adjust the ride of the motorcycle or to accomodate different riders, differing weight loads or changed road conditions.

Traditionally, front suspension systems of motorcycles have not been as well developed. Until relatively recently, motorcycles have been virtually universally equipped with a fork-type front end suspension system. The fork tubes are connected through a head assembly to a rotatable steering column which is journalled to the frame of the motorcycle. The axle of the front wheel is journalled to the lower ends of the fork tubes. Such designs have a recognized disadvantage in that all weight loads and road shocks on the front wheel are transmitted up through the front fork to the frame of the motorcycle, at a point on the frame which is well above and forward of the center of gravity of the motorcycle. This results in the front fork, the attached steering head, and the upper portions of the frame all being necessarily stronger, and thus heavier, than would be necessary to merely bear the suspension loads on the front wheel of the motorcycle. It also results in the entire front suspension system turning with the front wheel, when all that needs to be turned to effect steering is the front wheel, thus increasing the steering effort and the amount of unsprung mass of the front wheel.

It has already been thought about a motorcycle having a one-sided front swing arm suspension system. The system would include upper and lower control arms which are hinged to the frame of the motorcycle and which extend forwardly from the frame to a steering knuckle (also known as a kingpin). The steering knuckle extends along one side of the front wheel at a rake angle (i.e., the steering knuckle extends at an angle upwardly and rearwardly from the wheel axle to the steering column) which is similar to the rake angle of a conventional telescoping fork, and curves around the outer periphery of the wheel. A substantial rake angle is necessary and desirable to obtain satisfactory motorcycle steering response, and is also desirable because it renders the suspension most effective in absorbing road shocks.

The front wheel is journalled in a cantilevered fashion to an axle which extends transversely from the lower end of the steering knuckle. The lower control arm is arcuate and extends alongside of and around the front wheel. The lower control arm is connected to the lower end of the steering knuckle by means of a ball joint which allows the front wheel to be steered while also allowing swinging motion of the control arm. The upper control arm extends forwardly from the frame of the motorcycle and is connected to the upper end of the steering knuckle, at a location above the front wheel, also by means of a ball joint. The upper and lower control arms swing in parallel so as to absorb road shocks and weight loads on the front wheel.

A one-sided front swing arm suspension arrangement, similar in certain major respects to that just described and corresponding to the preamble of claim 1, is also set forth in United States Patent US-A-4526249 to James G. Parker, issued on July 2, 1985. Details of this suspension arrangement are disclosed in the '249 patent, which is expressly incorporated herein by reference.

It has been recognized that one primary advantage of the one-sided front swing arm suspension has been that weight and shock loads on the front wheel can be effectively borne by the motorcycle frame at a point low and close to the center of gravity of the frame, rather than at the point where the steering column is journalled to the frame.

However, a problem which may be encountered when employing a swing arm front wheel suspension system for a motorcycle involves the forwards and backwards lateral movement of the arrangement as the swing arms move through their respective arcs about axes defined by the points at which the swing arms connect to the motorcycle's frame. It is desirable that such forwards and backwards lateral movement be kept to a minimum.

Additionally, it has been recognized that a means for fine tuning the relative positioning between the swing arms and steering knuckle in front swing arm type suspension systems is desirable. Sometimes a rider may prefer a different camber angle of the front wheel in front swing arm arrangements. A fine tuning system could allow for the ready tuning of the suspension system until the desired camber angle of the front wheel is achieved. Of course, it is most desirable to have a fine tuning system that is easy to operate and which does not add excessive bulk or weight to a motorcycle front swing arm type suspension arrangement.

Accordingly it is an objective of the present invention to provide an improved motorcycle of the initially indicated type that permits an easy and convenient fine tuning of the camber angle of the front wheel supported by a swing arm suspension arrangement.

According to the present invention, this object is achieved by a motorcycle having the features of claim 1.

Since the alignment adjusting means is connected with the upper swing arm which is not connected to the shock absorber, the alignment adjusting means can be small and light, as only relatively small forces act on said upper swing arm while the large external forces resulting from the front wheel suspension act on the lower swing arm which is connected with the shock absorber.

According to a preferred embodiment of the present invention, the alignment adjusting means comprises means for locking said steering knuckle in place with respect to said upper swing arm.

According to another preferred embodiment of the present invention, the alignment adjusting device comprises a nut body integrally formed with said second connection of said upper swing arm and first and second protrusions of an upper portion of said steering knuckle; said nut body being positioned in a region between said first and second protrusions:; each of said protrusions having a bore formed laterally therethrough; said nut body having a threaded bore formed laterally therethrough, said nut body bore being coaxially positioned with respect to said bores of said first and second protrusions; and further comprising a rotatable threaded screw shaft, wherein said screw shaft is positioned within said threaded bore of said nut body, and wherein each end of said screw shaft is received within a respective bore of each of said steering knuckle protrusions; so that rotation of said screw shaft within said nut body changes the relative lateral positioning between said nut body and said steering knuckle extensions.

In the following, the present invention is explained in greater detail by means of several preferred embodiments thereof as shown in the drawings, wherein:
Figure 1 is a side elevational view, with portions shown in phantom, of a forward portion of a motorcycle equipped with a front wheel suspension arrangement constructed in accordance with a first feature of the present invention.
Figure 2 is a front cross-sectional view, with portions shown in phantom, of the front wheel suspension arrangement as constructed in accordance with the first feature of the invention.
Figure 3 is a top plan view of an upper swing arm and ball joint connection of the front wheel suspension arrangement as constructed in accordance with the first feature of the invention.
Figure 4 is an enlarged side view of a first embodiment of a front wheel alignment adjusting system of the front wheel suspension arrangement as constructed in accordance with the first feature of the present invention.
Figure 5 is a cross-sectional view taken along the lines V-V of Figure 4.
Figure 6 is a cross-sectional view, similar to Figure 5, showing a second embodiment of the alignment adjusting system of the invention.
Figure 7 is a cross-sectional view, similar to Figure 5, showing a third embodiment of the alignment adjusting system of the invention.
Figure 8 is a cross-sectional view, similar to Figure 5, showing a fourth embodiment of the alignment adjusting system of the invention.
Figure 9 is a side elevational view of a motorcycle having a front wheel suspension arrangement constructed in accordance with the present invention.
Figure 10 is an enlarged partial side elevational view of a forward portion of the motorcycle of Figure 9.
Figure 11 is a cross-sectional view taken along the line XI-XI of Figure 10.
Figure 12 is a cross-sectional view taken along the line XII-XII of Figure 10.
Figure 13 is a cross-sectional view taken along the line XIII-XIII of Figure 10.
Figure 14 is an enlarged side view, with portions shown in section, of the front wheel suspension arrangement in accordance with the present invention.

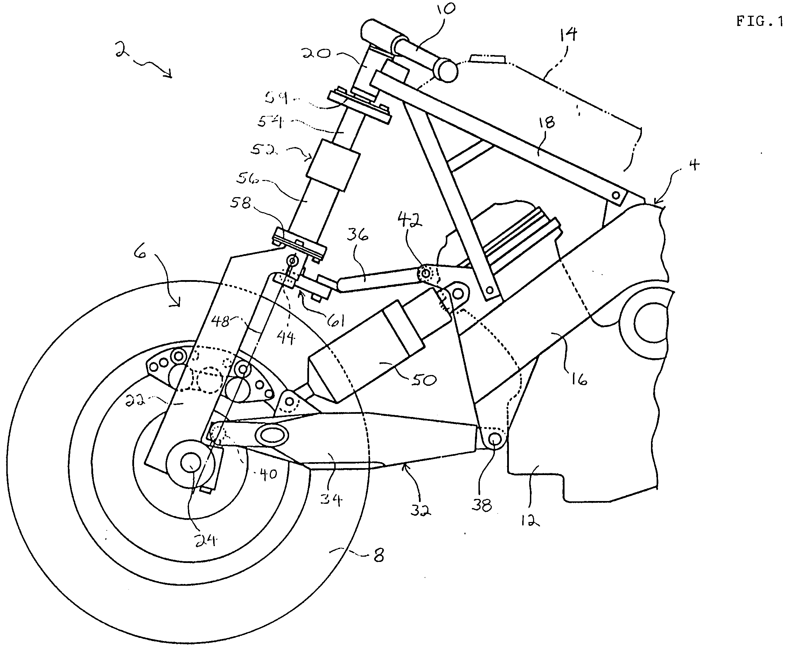

Referring first to Figures 1 through 3, a motorcycle, indicated generally by the reference numeral 2, is shown according to an embodiment of the present invention.

The motorcycle 2, as illustrated, includes a body frame and a front wheel suspension system, denoted generally by the reference numerals 4 and 6, respectively. A steerable front wheel 8 is rotatably supported by the front wheel suspension system 6. A handle bar 10 is mounted above the front wheel 8. Further included is an engine, illustrated in simplified form and denoted by the reference numeral 12, and a fuel tank, shown in phantom and denoted by the reference numeral 14. The engine 12 may be of any suitable type, such as an electronically fuel injected, four cylinder in-line type, four cycle engine.

The body frame 4 is provided with a pair of main brackets 16, with one bracket 16 lying on each side of the engine 12. Thus, the engine 12 is, in effect, sandwiched between the brackets 16. The brackets 16 are tightly connected to one another by a cross member (not shown). At a forward portion of the brackets 16 there is formed a steering frame 18 which, when viewed from the side as in Figure 1, is in the form of a triangle projecting upward and forwardly at its uppermost corner. A head pipe 20 is mounted along this projecting corner of the steering frame 18 and supports the handle bar assembly 10.

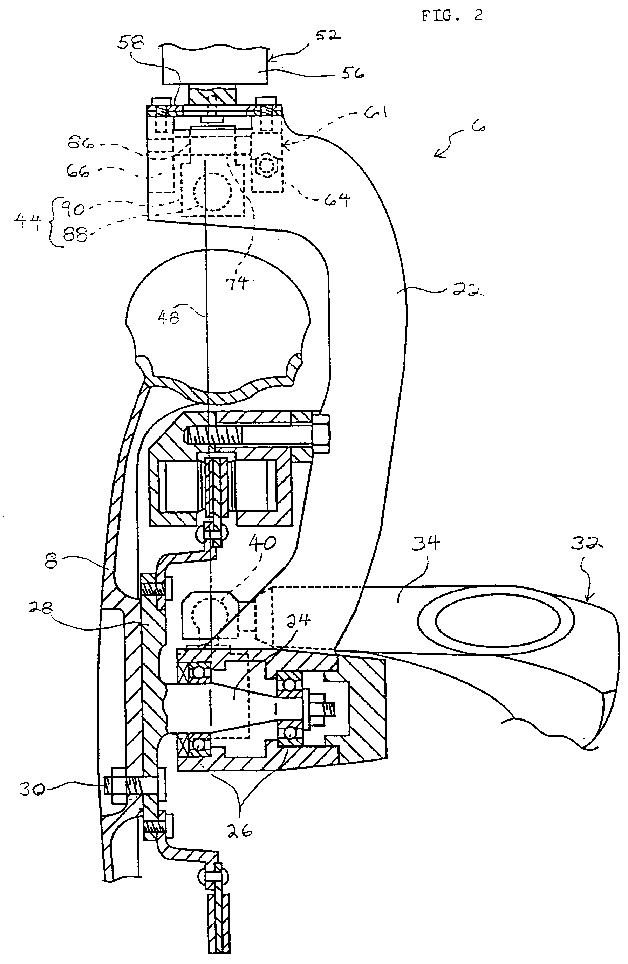

The above-mentioned front wheel suspension device 6 is of the so-called wishbone type and has a steering knuckle (also known as a kingpin) 22 located to the left side of the front wheel 8, relative to a seated operator. A wheel shaft or axle 24 extends into and is journalled in a bearing assembly 26 formed in the lower end of the steering knuckle 22, as shown in Figure 2. A flange 28 is formed on the right-hand side of the wheel shaft 24. The front wheel 8 is secured by bolts 30 to the flange portion 28, so that the front wheel 8 may be supported by the lower end of the steering knuckle 22.

The steering knuckle 22 is supported, for upward and downward movement, along the forwardmost portion of the main brackets 16 by a linkage arrangement, denoted generally by the reference numeral 32. The linkage arrangement 32 specifically includes pair of control arms, having a lower arm 34 and an upper arm 36. The lower arm 34 is pivotally connected to a forward, lower end of the brackets 16 about a pivot shaft 38. The lower arm 34 has a forwardmost rocking end to which the lower portion of the steering knuckle 22 is connected via a ball joint 40.

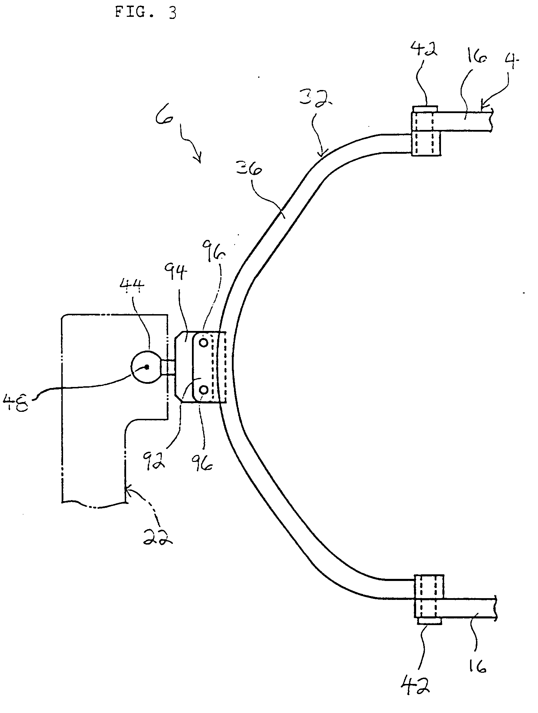

As particularly illustrated in Figure 3, the upper arm 36 has a rearwardly extending U-shape. The rearwardmost ends of the rearwardly extending left and right sides of the upper arm 36 are pivotally connected to the main brackets 16 through respective pivot shafts 42. The upper arm 36 is swingable about the pivot shafts 42 and has a forwardmost end to which an upper portion of the steering knuckle 22 is connected by way of another ball joint 44. Together, the lower and upper ball joints, 40 and 44, permit universal pivotal motion between the steering knuckle 22 and each of the control arms, 34 and 36.

The axis extending from the lower and upper ball joints, 40 and 44, represents the steering axis 48 about which the steering knuckle 22 and front wheel 8 are steerable.

A hydraulic shock absorber 50 is provided between a front upper portion of the main brackets 16 and the lower am 34. The shock absorber 50 is operative to maintain the lower arm 34 and steering knuckle 22 in a predetermined position by absorbing shocks transmitted from the front wheel 8 to the body frame 4 by way of extending and contracting motions.

Cooperating with these extending and contracting motions of the shock absorber 50 is a telescoping tube arrangement 52 disposed between the steering knuckle 22 and the handle bar assembly 10. This cooperating arrangement 52 is composed of a sliding shaft 54, mounted to a lower end of the handle bar arrangement 10 through a blade spring 59, and a casing 56, mounted on an upper end of the steering knuckle 22 through a blade spring 58. The sliding shaft 54 has a protruded end slidably inserted into the casing 56 along its axial direction.

Thus, steering of the front wheel 8 is accomplished by turning the handle bar assembly 10 about the steering axis 48, and occurs through the telescoping tube arrangement 52 and the steering knuckle 22. During operation of the motorcycle 2, when vertical movement is imparted to the steering knuckle, for example when the front wheel 8 encounters a bump, the sliding shaft 54 slides relative to the casing 56 in order to absorb variations in the vertical positioning of the steering knuckle 22 relative to the handle bar assembly 10. Further, the blade springs 58 and 59 function to absorb the variation of the relative inclination of the steering knuckle 22, handle bar assembly 10 and the telescoping tube arrangement 52.

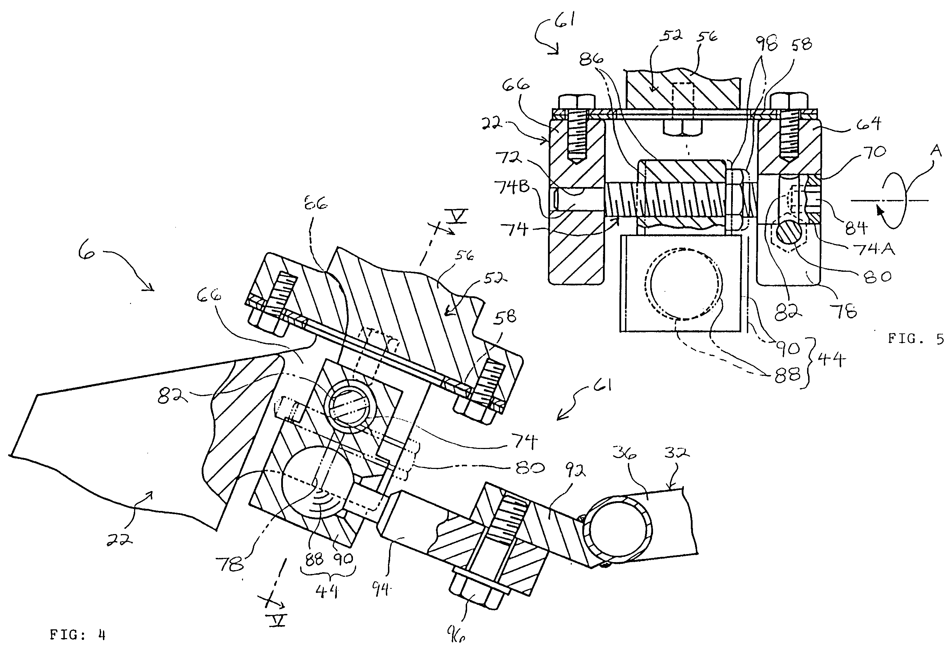

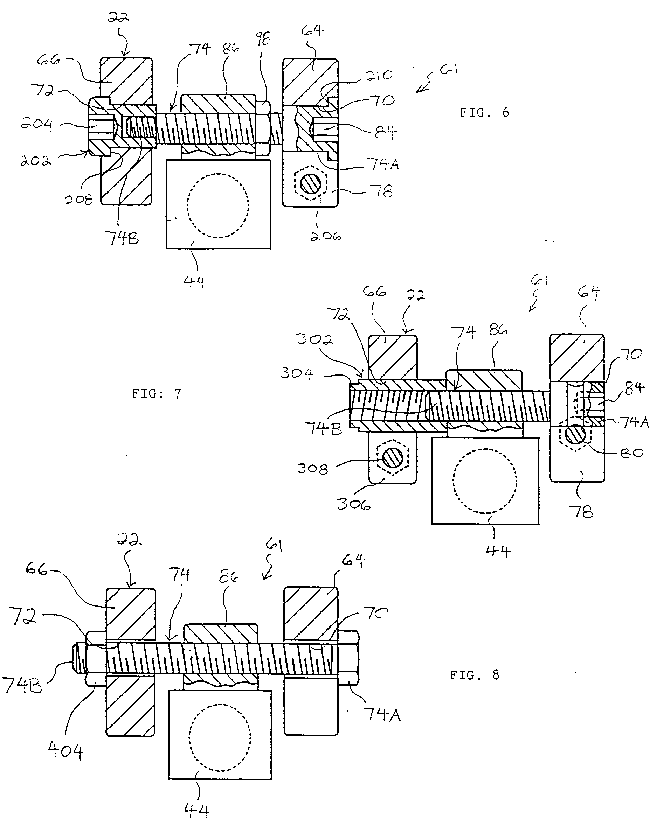

Referring now to Figures 4 and 5, in addition to Figures 1 through 3, the alignment adjusting device 61 of this invention will be described in detail. The alignment adjusting device is located in the region where the steering knuckle 22 and the upper arm 36 are connected to one another.

The steering knuckle 22, on the left and right along its upper rear side, is provided with a pair of rearward protrusions 64 and 66. The protrusions 64 and 66 have a pair of coaxial, horizontal bores 70 and 72 integrally formed therein. A screw shaft, generally denoted by the reference numeral 74, extends therethrough in a generally horizontal fashion, perpendicular with respect to the steering axis 48. The left side 74A of the screw shaft 74 is inserted into the left bore 70 and the right side 74B of the screw shaft 74 is inserted into the right bore 72. The screw shaft 74 is supported within the bores 70 and 72 in such a manner that the shaft 74 is rotatable about its axis.

A slot 78 is formed within the left protrusion 64, with the slot 78 extending downwardly from the bore 70 formed therein. A fastening bolt 80 extends through a hole which traverses the length of the protrusion 64 in a direction running perpendicular to the plane of the slot 78. Thus, upon tightening of the fastening bolt 80 the opposing portions of the left protrusion 64 which are adjacent the slot 78 are brought closer together, thereby securing the left side 74A of the screw shaft 74 within the left bore 70 and preventing its rotation.

A groove 82 is formed about the periphery of the left end 74A of the screw shaft 74. An intermediate portion of the fastening bolt 80 lies within the groove 82 of the screw shaft left end 74A. This arrangement ensures that the left end 74A of the screw shaft 74 remains in place within the left bore 70, and thus determines the lateral positioning of the screw shaft 74. The outer face of the left end 74A of the screw shaft 74 is provided with a hexagonal hole 84 capable of receiving a hexagon spanner.

A nut body 86 is provided with a threaded interior for receiving the screw shaft 74 therein. A lock nut 98 is in threading engagement with the screw shaft 74 and is positioned thereabout between the left protrusion 64 and the nut body 86. Proximate to the nut body 86, lies the upper ball joint 44. This ball joint 44 is composed of a ball 88 and a ball receiver 90. The ball receiver 90 supports the ball 88. The ball receiver 90 is integrally formed along the lower end of the nut body 86.

A bracket plate 92 is welded in place along the front upper end of the upper arm 36. A support plate 94, for supporting the ball 88, is detachably secured to the bracket plate 92 by a pair of bolts 96.

The operation procedures of the alignment adjusting device 61 of this invention, of the construction just described, will next be described, with particular reference to Figure 5.

First, the fastening bolt 80 is loosened in order to make the screw shaft 74 readily rotatable. Also, the lock nut 98 is loosened so the screw shaft 74 will be rotatable relative to the nut body 86. Then, a spanner is inserted in the engaging hole 84 and is rotated in a direction as shown by the arrow A in Figure 5. Consequently, the nut body 86 is displaced from the position as shown by the phantom lines in Figure 5 to the position as shown by the solid lines, thereby changing the position of the upper portion of the steering knuckle 22 relative to the upper arm 36.

Thus, the lateral positioning of the steering knuckle 22 can be adjusted about the lower ball joint 40, at which the steering knuckle 22 and lower swing arm 34 are connected. By changing the positioning of the steering knuckle 22, and thereby the front wheel 8, any camber angle of the front wheel 8 may be adjusted to zero.

When such adjustments have been completed, the lock nut 98 is rotated to fasten it against the nut body 86 so as to inhibit relative movement between the screw shaft 74 and the nut body 86. The fastening bolt 80 is also fastened in order to inhibit any further rotation of the screw shaft 74. The alignment adjusting procedure is thereby completed.

In the embodiment described above, corresponding to the illustrations of Figures 1 through 5, the screw shaft 74 is operatively associated with the upper arm 36 via the nut body 86 mounted proximate the steering knuckle 22. However, it is to be understood that the alignment adjusting device 61 could instead be disposed between the bracket plate 92 and the support plate 94.

Instead of providing the alignment adjusting device 61 in the region whereat the steering knuckle 22 and the upper arm 36 are connected, as set out above, the device 61 may be positioned along the region at which the steering knuckle 22 and the lower arm 34 connect together. In the latter arrangement, however, due to a relatively large external force acting upon the connecting portion of the steering knuckle 22 and lower arm 34, the structure would be large and complicated. For this reason, the preferred mode of this invention employs the alignment adjusting device 61 along the region whereat the steering knuckle 22 and upper arm 36 are connected.

Figures 6 through 8 illustrate further embodiments of the alignment adjusting device of the present invention. Since the fundamental structure and function of each of these further embodiments are the same as those in the above-discussed first embodiment, similar components are designated by similar reference numerals in these Figures. The further embodiments of Figure 6 through 8, as described below, are discussed only to the extent that they differ in structural and functional details as compared to the first embodiment described above.

Figure 6 illustrates a second embodiment of the alignment adjusting device 61. In the second embodiment, a nut 202 which is rotatable about its central axis is inserted into the right bore 72. The right end of the screw shaft 74 is provided with threads which engage mating threads located within the nut 202. The nut 202 is provided with a spanner engaging polygonal hole 204, which is similar to the hole 84 on the left side 74A of the screw shaft 74. A fastening bolt 206, similar to the fastening bolt 80 of the first embodiment, is provided across the slit 78.

Flanged extension portions 208 and 210 are formed about the nut 202 and the left side 74A of the screw shaft 74, respectively. Upon fastening the nut 202 on the right side 74B of the screw shaft 74, the flanged portions 208 and 210 engage the outer sides of the protrusions 66 and 64, from areas therein where the flanged portions are seated, with an inwardly directed force. After adequate fastening in such a manner, further rotation of the screw shaft 74 within the bores 70 and 72 will thereby be prohibited. At a subsequent time, when the nut 202 is loosened from the right end 74B of the screw shaft 74, the screw shaft 74 then becomes freely rotatable.

Figure 7 illustrates a third embodiment of the alignment adjusting device 61. In the third embodiment, a cylindrical nut 302, which is rotatable about is longitudinal axis, is inserted into the right bore 72 of the right protrusion 66. The right end of the screw shaft 74 is provided with threads which engage mating threads located within the cylindrical nut 302. Together, the cylindrical nut 302 and the screw shaft 74 support the nut body 86 in place proximate to the steering knuckle 22.

The cylindrical nut 302 serves to function as a lock nut which holds the nut body 86 in place with respect to the two protrusions 64 and 66. A spanner engaging portion 304 is provided at the outer end of the cylindrical nut 302 for turning the cylindrical nut 302, as desired. A slit 306, similar to the slit 78, is formed within the right protrusion 66. A fastening bolt 308 is also provided, which may be fastened in order to prevent rotation of the cylindrical nut 302 within the right bore 72.

Figure 8 illustrates a fourth embodiment of the alignment adjusting device 61. In the fourth embodiment, the screw shaft 74 is of a commercially available type, having a bolt head at the left end 74A thereof. The right end engages a nut 404 by way of a threading arrangement, as is well known.

Upon fastening the nut 404 to the right end 74B of the screw shaft 74, the head of the screw shaft 74 at its left end 74A and the nut 404 press inwardly on the left and right protrusions 66 and 64, until further rotation of the screw shaft 74 is inhibited.

It should be clear that the four embodiments of the above-described alignment adjusting device, as detailed above, all readily permit for the tuning of the front wheel suspension and steering system of the invention. Specifically, utilizing any one of the above screw shaft and nut body arrangements, the relative lateral positioning between the steering knuckle and the upper swing arm can be adjusted about an axis comprising the lower ball joint connection, whereat the steering knuckle adjoins the lower swing arm, until the desired camber angle of the front wheel is achieved.

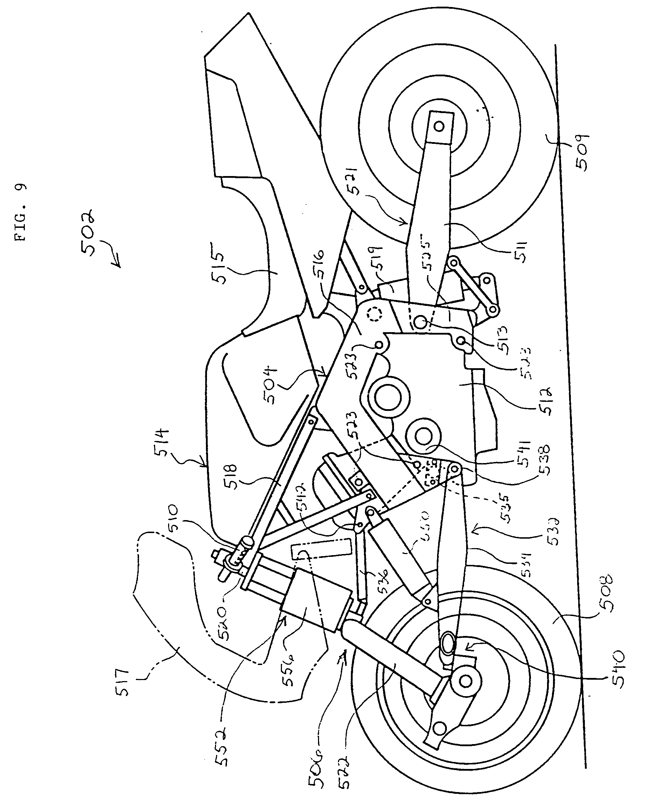

Figure 9 is a side elevational view of the additional motorcycle construction, indicated generally by the reference numeral 502, in connection with which the particular geometric arrangement of certain components of the front wheel swing arm suspension arrangement will next be described. The motorcycle 502 includes generally a front wheel 508, a rear wheel 509, and an engine 512. Also, other various conventional components are included; for example, a handlebar arrangement 510, a fuel tank 514, a seat 515, and a cowling arrangement 517.

A body frame and a front wheel suspension system are provided and are denoted generally by the reference numerals 504 and 506, respectively. The front wheel 508 is steerable and is supported by the front wheel suspension system 506. The handle bar assembly 510 is mounted above the front wheel 508.

It should be noted that the motorcycle construction as depicted in Figure 9 employs a rear swing arm suspension system, denoted generally by the reference numeral 521, in addition to the front spring suspension system of the invention 506. The rear wheel 509 is journalled to the end of a U-shaped fork or swing arm 511. The rear swing arm 511 is hinged to a rearward portion 525 of the frame 504 of the motorcycle 502 about a pivot axis 513 and extends rearwardly. The rear swing arm 511 and wheel 509 undergo vertical swinging motion in response to road shocks and varying weight loads. The swing arm 511 is spring loaded downwardly, by way of a shock absorber 519, so that the swing arm 511 can bear ordinary weight loads as well as road shocks.

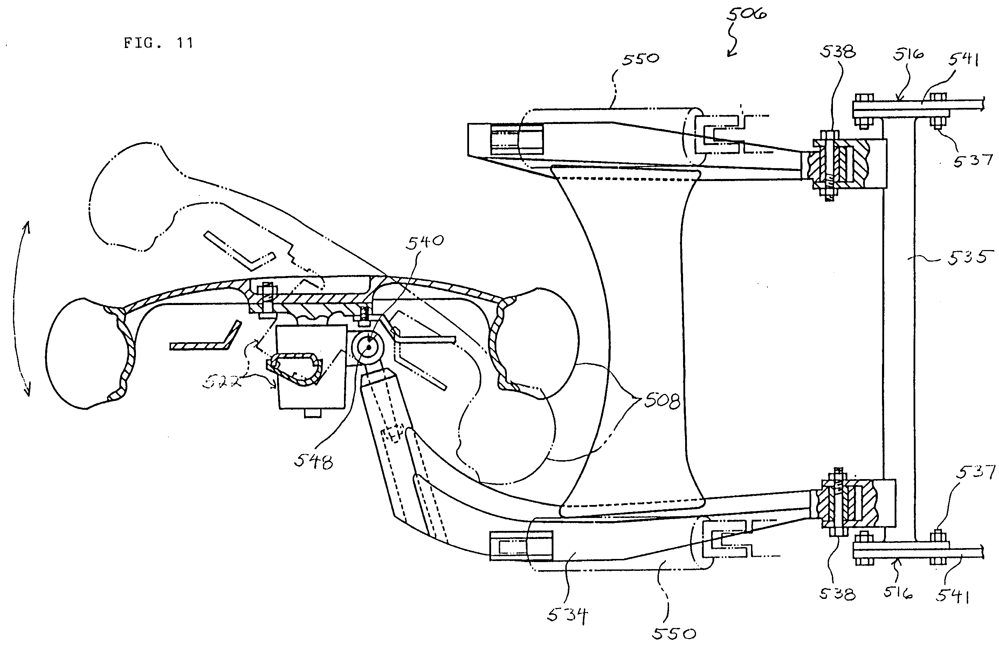

The front swing arm suspension 506 of the motorcycle 502 is very similar to that of the motorcycle 2 illustrated in Figures 1 through 8. Specifically, the body frame 504 is provided with a pair of main brackets 516, with one bracket lying on each side of the engine 512. The brackets 516 are tightly connected to one another by a cross member 535 secured in place by bolts 537 at a forward section 541 of the brackets 516, as shown in Figure 11. The engine 512 is attached to the brackets 516 by appropriate connections at various locations 523.

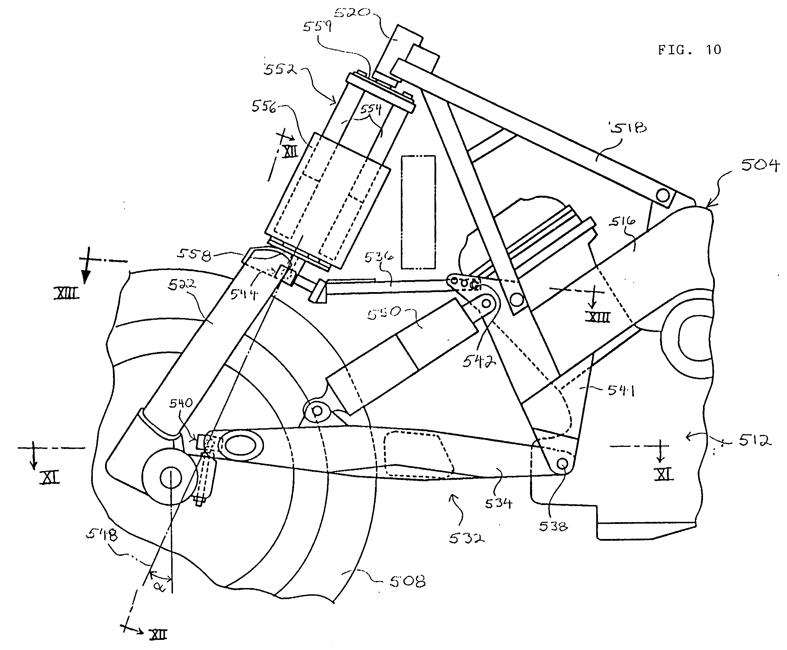

At a forward portion of the brackets 516 there is formed a steering frame 518 which, when viewed from the side as in Figures 9 and 10, is in the form of a triangle projecting upward and forwardly at its uppermost corner. A head pipe 520 is mounted along this projecting corner of the steering frame 518 and supports the handle bar assembly 510.

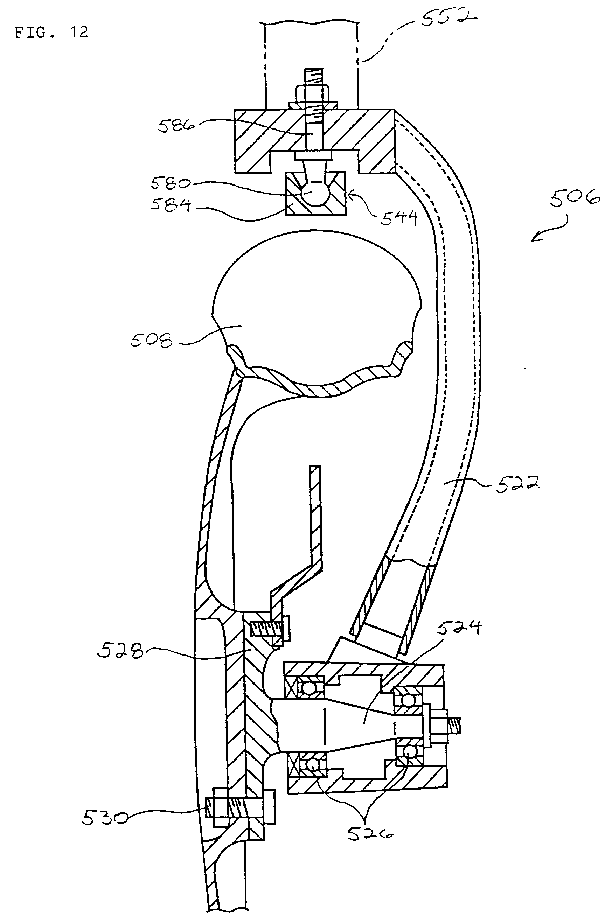

The above-mentioned front wheel suspension device 506 is of the so-called wishbone type and has a steering knuckle (also known as a kingpin) 522 located to the left side of the front wheel 508, relative to a seated operator. A wheel shaft or axle 524 extends into and is journalled in a bearing assembly 526 formed in the lower end of the steering knuckle 522, as shown in Figure 12. A flange 528 is formed on the right-hand side of the wheel shaft 524. The front wheel 508 is secured by bolts 530 to the flange portion 528, so that the front wheel 508 may be supported by the lower end of the steering knuckle 522.

The steering knuckle 522 is supported, for upward and downward movement, along the forwardmost portion of the main brackets 516 by a linkage arrangement, denoted generally by the reference numeral 532. The linkage arrangement 532 specifically includes pair of control arms, having a lower arm 534 and an upper arm 536. The lower arm 534 is pivotally connected to a forward, lower end of the brackets 516 about a pivot shaft 538. The lower arm 534 has a forwardmost rocking end to which the lower portion of the steering knuckle 522 is connected via a ball joint 540.

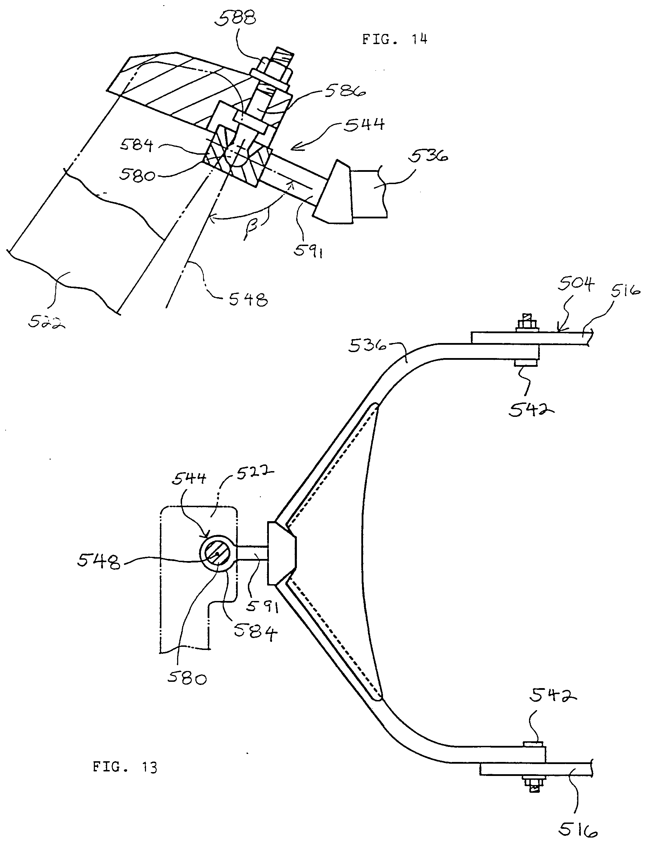

As particularly illustrated in Figure 13, the upper arm 536 has a rearwardly extending U-shape. The rearwardmost ends of the rearwardly extending left and right sides of the upper arm 536 are pivotally connected to the main brackets 516 of the body frame 504 through respective pivot shafts 542. As shown in Figure 10, the pivot shafts 542 may be variably positionable, as desired, among several holes located along the upper region of the brackets 504. The upper arm 536 is swingable about the pivot shafts 542 and has a forwardmost end to which an upper portion of the steering knuckle 522 is connected by way of another ball joint 544. Together, the lower and upper ball joints, 540 and 544, permit universal pivotal motion between the steering knuckle 522 and each of the control arms, 534 and 536.

The axis extending from the lower and upper ball joints, 540 and 544, represents the steering axis 548 about which the steering knuckle 522 and front wheel 508 are steerable.

A hydraulic shock absorber 550 is provided between a front upper portion of the main brackets 516 and the lower arm 534. The shock absorber 550 is operative to maintain the lower arm 534 and steering knuckle 522 in a predetermined position by absorbing shocks transmitted from the front wheel 508 to the body frame 504 by way of extending and contracting motions. As shown in Figure 11, the lower swing arm 534 may have a generally horizontal portion which arcs around the rear of the front wheel 508 thus permitting a pair of such hydraulic shock absorbers 550 to be employed.

Cooperating with the extending and contracting motions of the shock absorber(s) 550 is a telescoping tube arrangement 552 disposed between the steering knuckle 522 and the handle bar assembly 510. This cooperating arrangement 552 is composed of a pair of sliding shafts 554, mounted to a lower end of the handle bar arrangement 510 through a blade spring 559, and also a casing 556, mounted on an upper end of the steering knuckle 522 through a blade spring 558. The sliding shafts 554 each have a protruded end slidably inserted into the casing 556 along their axial directions.

Thus, steering of the front wheel 508 is accomplished by turning the handle bar assembly 510 about the steering axis 548, and occurs through the telescoping tube arrangement 552 and the steering knuckle 522. During operation of the motorcycle 502, when vertical movement is imparted to the steering knuckle, for example when the front wheel 508 encounters a bump, the sliding shaft 554 slides relative to the casing 556 in order to absorb variations in the vertical positioning of the steering knuckle 522 relative to the handle bar assembly 510. Further, the blade springs 558 and 559 function to absorb the variation of the relative inclination of the steering knuckle 522, handle bar assembly 510 and the telescoping tube arrangement 552.

Referring now particularly to Figure 14, the specific geometric arrangement of the components in the upper ball joint region 544 will next be described. As shown in the Figure, the upper ball joint arrangement 544 includes a ball 580 which is held within a socket structure 584. Extending primarily upward and somewhat rearwardly from the ball 580, out of the socket structure 584, is a bolt 586 which extends through a top portion of the steering knuckle 522 and is secured thereto, as by way of a nut 588. A support plate 591 extends primarily rearward and somewhat downwardly from the socket structure 584. The rearwardmost end of the support plate 591 is attached to a forward portion of the upper swing arm 536.

The geometric arrangement involves the angular relationship between the steering axis 548 and an axis defined by a line running along the longitudinal direction of the support plate 591 and through the ball 580 of the upper ball joint 544. First, it is to be noted that the forwardmost portion of upper swing arm 536, and thus the upper ball joint 544 as well, are moveable through an arc, having upper and lower maximum positions, about the pivot axis 542. The steering axis 548 and the axis defined by the line running along the longitudinal direction of the support plate 591 and through the ball 580 of the upper ball joint 544, are shown as broken lines in Figure 14. The latter axis is set to be perpendicular with respect to the steering axis 548 when the upper ball joint 544 is positioned at a midpoint of the arc; that is, between the arc's upper and lower maximum positions. Thus, under such a condition the angle β, shown in Figure 14, is ninety degrees.

In the shown arrangement, upper and lower swing arms connect the motorcycle frame to a steering knuckle which extends along one side of the front wheel. The upper swing arm is shorter in length than the lower swing arm and is pivotally connected to the frame of the motorcycle at a point forwardly of a pivotal connection for the lower swing arm. The swing arms are positioned so that forwards and backwards lateral movement of the suspension system is kept to a minimum and the rake angle of the steering arrangement is held nearly constant during suspension travel, as when the motorcycle encounters a bump during operation. The swing arm suspension arrangement of the invention is compact and allows for good maneuverability of the motorcycle and also for easy access to the engine, as for repairs. A telescoping tube assembly having a pair of elongated tubes reciprocal within associated bores, for absorbing the swing motion of the suspension arrangement adds to the superior steering and shock absorbing capabilities of the motorcycle. Through the alignment adjusting device the relative lateral position between the steering knuckle and preferably the upper arm can be changed, so that the lateral rotational position of the steering knuckle can be adjusted with the connecting portion of the steering knuckle and the lower arm serving as the center. Therefore, the camber angle of the front wheel which is rotated leftwardly and rightwardly together with the steering knuckle can be adjusted. Thus, an assembly error of the front wheel suspension device can be absorbed by the above adjustment to provide required assemblance accuracy. Therefore, there is obtainable a merit that the preparation of respective component parts is easy since high accuracy is not required in preparing them.

It should be readily apparent from the foregoing description that a number of embodiments of the invention have been described which provide an improved suspension and steering arrangement for the front wheel of a motorcycle, and relate, in particular, to a one-sided front swing arm suspension system for a motorcycle.

## Claims

1. Motorcycle with front wheel steering and suspension arrangement comprising: a frame (4, 504), a steering knuckle (22, 522) extending along one side of said front wheel (8;508), a pair of swing arms (34, 36; 534, 536) having first and second ends, first connections (38, 42; 538, 542) for pivotably connecting said first ends of said swing arms (34, 36; 534, 536) with said frame (4, 504) and second connections (40, 44; 540, 544) for connecting said second ends of said swing arms (34, 36; 534, 536) with said steering knuckle (22, 522) wherein a steering axis (48; 548) passes through said second connections (40, 44; 540, 544), said front wheel (8; 508) and said steering knuckle being rotatable about said steering axis (48; 548), and further comprising a shock absorber (50) connected with the frame (4, 504) and the lower one of said swing arms (34; 534),
**characterised in that**
a portion (591) of the upper one of said swing arms (536) nearest said second connection (544) forms a right angle (β) with respect to said steering axis (548) when said swing arms (34, 36; 534, 536) are in a midposition between an upper and a lower maximum position thereof, and an alignment adjusting means (61) for adjusting the lateral positioning of said steering knuckle (22, 522) relative to said frame (4, 504) is provided at said upper swing arm (36; 536).

2. Motorcycle as claimed in claims 1, **characterised in that** said first connections are pivotal connections (38, 42; 538, 542).

3. Motorcycle as claimed in at least one of the preceding claims 1 to 2, **characterised in that** said second connections are ball joint connections (40, 44; 540, 544).

4. Motorcycle as claimed in at least one of the preceding claims 1 to 3, **characterised in that** said upper swing arm (36; 536) is generally arcuately shaped, and further comprising a support plate (94; 591) extending forwardly from a forward portion of said upper swing arm (36; 536).

5. Motorcycle as claimed in claim 4, **characterised in that** a ball (88) is positioned at a forwardmost portion of said support plate (94).

6. Motorcycle as claimed in at least one of the preceding claims 1 to 5, **characterised in that** said alignment adjusting means (61) is located proximate said second connection (42) connecting the upper swing arm (36) with the steering knuckle (22).

7. Motorcycle as claimed in at least one of the preceding claims 1 to 6, **characterised in that** said alignment adjusting means (61) comprises means (86) for locking said steering knuckle (22) in place with respect to said upper arm (36, 536).

8. Motorcycle as claimed in at least one of the preceding claims 1 to 7, **characterised in that** said alignment adjusting means (61) comprises a nut body integrally formed with said second connection (44) of the upper swing arm, and first and second protrusions (64, 66) of an upper portion of said steering knuckle (22); said nut body (86) being positioned in a region between said first and second protrusions (64, 66); each of said protrusions (64, 66) having a bore (70, 72) formed laterally therethrough; said nut body (86) having a threaded bore formed laterally therethrough, said nut body bore being coaxially positioned with respect to said bore (70, 72) of said first and second protrusions (64, 66); and further comprising a rotatable threaded screw shaft (74), wherein said screw shaft (74) is positioned within said threaded bore of said nut body (86), and wherein each end of said screw shaft (74) is received within a respective bore (70, 72) of each of said steering knuckle protrusions (64, 66), so that rotation of said screw shaft (74) within said nut body (86) changes the relative lateral positioning between said nut body (86) and said steering knuckle extensions (64, 66).

9. Motorcycle as claimed in at least one of the preceding claims 1 to 8, **characterised in that** an upper, forwardly located portion of said frame (504, 516) is provided with a plurality of variably positioned attachment points at which said first connection (542) of the upper swing arm (536) can be located.

## Patentansprüche

1. Motorrad mit einer Vorderradlenk- und -aufhängungsanordnung, mit:
einem Rahmen (4;504), einem Lenkhebel (22;522), der sich entlang einer Seite des Vorderrades (8;508) erstreckt, einem Paar Schwenkarme (34,36;534,536), die erste und zweite Enden aufweisen, ersten Verbindungen (38,42;538,542) zur schenkbaren Verbindung der ersten Enden der Schwenkarme (34,36;534,536) mit dem Rahmen (4,504) und zweiten Verbindungen (40,44;540,544) zur Verbindung der zweiten Enden der schwenkarme (34,36;534,536) mit dem Lenkarm (22,522), wobei eine Lenkachse (48;548) durch die zweiten Verbindungen (40,44;45,544) hindurch verläuft, wobei das Vorderrad (8;508) und der Lenkarm um die Lenkachse (48;548) drehbar sind und außerdem mit einem Stoßdämpfer (50), der mit dem Rahmen (4,504) und dem unteren der Schwenkarme (34;534) verbunden ist,
**dadurch gekennzeichnet,** daß
ein Abschnitt (591) des oberen der Schwenkarme (536) nächstliegend zu der zweiten Verbindung (544) einen rechten Winkel (β) in Bezug auf die Lenkachse (548) bildet, wenn die Schwenkarme (34,36;534,536) in einer Mittelstellung zwischen ihrer oberen und unteren Maximalposition sind, und eine Ausrichtungs-Einstelleinrichtung (61) zum Einstellen der seitlichen Position des Lenkarmes (22,522) relativ zu dem Rahmen (4,504) an dem oberen Schwenkarm (36;536) vorgesehen ist.

2. Motorrad nach Anspruch 1, **dadurch gekennzeichnet,** daß die ersten Verbindungen Schwenkverbindungen (38,42;538,542) sind.

3. Motorrad nach zumindest einem der vorhergehenden Ansprüche 1 bis 2, **dadurch gekennzeichnet,** daß die zweiten Verbindungen Kugelgelenkverbindungen (40,44;45,544) sind.

4. Motorrad nach zumindest einem der vorhergehenden Ansprüche 1 bis 3, **dadurch gekennzeichnet,** daß der obere Schwenkarm (36;536) im wesentlichen bogenförmig gestaltet ist und außerdem eine Lagerungsplatte (94;591) aufweist, die sich von einem vorderen Abschnitt des oberen Schwenkarmes (36;536) nach vorwärts erstreckt.

5. Motorrad nach Anspruch 4, **dadurch gekennzeichnet,** daß eine Kugel (88) an einem vordersten Abschnitt der Lagerungsplatte (94) angeordnet ist.

6. Motorrad nach zumindest einem der vorhergehenden Ansprüche 1 bis 5, **dadurch gekennzeichnet,** daß die AusrichtungsEinstelleinrichtung (61) nahe der zweiten Verbindung (42) angeordnet ist, die den oberen Schwenkarm (36)mit dem Lenkarm (22) verbindet.

7. Motorrad nach zumindest einem der vorhergehenden Ansprüche 1 bis 6, **dadurch gekennzeichnet,** daß die Ausrichtungs-Einstelleinrichtung (61) eine Einrichtung (86) zur Verriegelung des Lenkarmes (22) in seiner Lage in Bezug auf den oberen Arm (36,536) aufweist.

8. Motorrad nach zumindest einem der vorhergehenden Ansprüche 1 bis 7, **dadurch gekennzeichnet,** daß die Ausrichtungs-Einstelleinrichtung (91) einen Mutterkörper aufweist, der einstückig mit der zweiten Verbindung (44) des oberen Schwenkarmes ausgebildet ist sowie erste und zweite Vorsprünge (64,66) eines oberen Teiles des Lenkarmes (22) aufweist, wobei der Mutternkörper (86) in einem Bereich zwischen dem ersten und zweiten Vorsprung (64,66) angeordnet ist, wobei jeder der Vorsprünge (64,66) eine Bohrung (70,72) aufweist, die seitlich durch diesen hindurchgeht, wobei der Mutternkörper (86) eine Gewindebohrung aufweist, die diesen seitlich durchsetzt, wobei die Mutternkörper-Gewindebohrung koaxial in Bezug auf die Bohrung (70,72) des ersten und zweiten Vorsprunges (64,66) angeordnet ist; und außerdem mit einer drehbaren Gewindeschraubenspindel (64), wobei die Gewindeschraubenspindel (74) innerhalb der Gewindebohrung des Mutternkörpers (86) angeordnet ist, und wobei jedes Ende der Gewindeschraubenspindel (74) in einer jeweiligen Bohrung (70,72) jedes der Lenkarmvorsprünge (64,66) aufgenommen ist, so daß eine Rotation der Gewindeschraubenspindel (74) innerhalb des Mutternkörpers (86) die relative seitliche Position zwischen den Mutternkörpern (86) und den Lenkarmvorsprüngen (64,66) ändert.

9. Motorrad nach zumindest einem der vorhergehenden Ansprüche 1 bi 8, **dadurch gekennzeichnet,** daß ein oberer, vorn angeordneter Teil des Rahmens (504,516) mit einer Mehrzahl von variabel angeordneten Verbindungspunkten versehen ist, an denen die erste Verbindung (542) des oberen Schwenkarmes (536) angeordnet werden kann.

## Revendications

1. Motocyclette avec aménagement de la direction et de la suspension de roue avant comprenant : un châssis (4, 504), une rotule de direction (22, 522) s'étendant le long d'un côté de ladite roue avant (8, 508), une paire de bras oscillants (34, 36; 534, 536) comprenant une première et une seconde extrémité (38, 42; 538, 542), des premières connexions (38, 42; 538, 542) destinées à connecter en pivot lesdites premières extrémités des dits bras oscillants (34, 36; 534, 536) au dit châssis (4, 504) et des secondes connexions (40, 44; 540, 544) destinées à connecter lesdites secondes extrémités des dits bras oscillants (34, 36; 534, 536) à ladite rotule de direction (22, 522) dans lequel un axe de direction (48; 548) passe par lesdites secondes connexions (40, 44; 540, 544), ladite roue avant (8; 508) et ladite rotule de direction étant en rotation autour du dit axe de direction (48; 548), et comprenant en outre un amortisseur (50) relié au châssis (4, 504) et au bras oscillant inférieur des dits bras oscillants (34; 534),
caractérisé en ce que
une partie (591) du bras supérieur des dits bras oscillants (536) plus proche de ladite seconde connexion (544) forme un angle droit (β) par rapport au dit axe de direction (548) lorsque lesdits bras oscillants (34, 36; 534, 536) sont en position médiane entre une position supérieure et une position inférieure de ceux-ci, et des moyens de réglage d'alignement (61) destinés à régler le positionnement latéral de ladite rotule de direction (22, 522) par rapport au dit châssis (4, 504) est disposé sur ledit bras oscillant supérieur (36; 536).

2. Motocyclette comme revendiquée dans la revendication 1
caractérisée en ce que
lesdites premières connexions sont des connexions pivotantes (38, 42; 538, 542).

3. Motocyclette comme revendiquée dans au moins une des précédentes revendications 1 à 2,
caractérisée en ce que
lesdites secondes connexions sont des connexions à rotule (40, 44; 540, 544).

4. Motocyclette comme revendiquée dans au moins une des précédentes revendications 1 à 3,
caractérisée en ce que
ledit bras oscillant supérieur (36, 536) est généralement en forme d'arc, et comprend en outre une plaque support (94; 591) s'étendant vers l'avant à partir d'une partie avant du dit bras oscillant supérieur (36; 536).

5. Motocyclette comme revendiquée dans la revendication 4,
caractérisée en ce que
une rotule (88) est positionnée sur la partie la plus en avant de la plaque support (94).

6. Motocyclette comme revendiquée dans au moins une des précédentes revendications 1 à 5,
caractérisée en ce que
lesdits moyens de réglage d'alignement (61) sont positionnés à proximité de ladite seconde connexion (42) reliant le bras oscillant supérieur (36) à la rotule de direction (22).

7. Motocyclette comme revendiquée dans au moins une des précédentes revendications 1 à 6,
caractérisée en ce que
lesdits moyens de réglage d'alignement (61) comprennent des moyens (86) destinés à verrouiller en place ladite rotule de direction (22) par rapport au dit bras oscillant supérieur (36, 536).

8. Motocyclette comme revendiquée dans au moins une des précédentes revendications 1 à 7,
caractérisée en ce que
lesdits moyens de réglage d'alignement (61) comprennent un corps d'écrou formé intégralement avec ladite seconde connexion (44) du bras oscillant supérieur, et des première et seconde saillies (64, 66) d'une partie supérieure de ladite rotule de direction (22); ledit corps d'écrou (86) étant positionné dans une zone situé entre lesdites première et seconde saillies (64, 66); chacune des dites saillies (64, 66) comportant un alésage (70, 72) formé latéralement dans celles-ci; ledit corps d'écrou (86) comportant un alésage fileté formé latéralement dans celui-ci, ledit alésage de corps d'écrou étant positionné coaxialement par rapport au dit alésage (70, 72) des dites première et seconde saillies (64, 66); et comprenant en outre un arbre fileté vissable par rotation (74), dans lesquels ledit arbre vissable (74) est positionné à l'intérieur du dit alésage fileté du dit corps d'écrou (86), et dans lesquels chaque extrémité du dit arbre vissable (74) est reçue à l'intérieur d'un alésage respectif (70, 72) de chacune des dites saillies de rotule de direction (64, 66), de sorte que la rotation du dit arbre vissable (74) à l'intérieur du dit corps d'écrou (86) modifie le positionnement latéral relatif entre ledit corps d'écrou (86) et lesdites saillies de rotule de direction (64, 66).

9. Motocyclette comme revendiquée dans au moins une des précédentes revendications 1 à 8,
caractérisée en ce que
une partie du dit châssis (504, 516) située en haut et vers l'avant comporte une pluralité de points de fixation à positionnement variable sur lesquels peut être positionné ladite première connexion (542) du bras oscillant supérieur (536).
